# EUROPEAN PATENT APPLICATION

(11) **EP 1 860 017 A2**
(43) Date of publication of application: **28.11.2007**
(21) Application number: 07010157.1
(22) Date of filing: 22.05.2007
(51) Int. Cl.: B62D 5/04, H02P 25/00

(54) **Motor for electric power steering apparatus**

(30) Priority: 26.05.2006 JP 2006146798
(71) Applicant: NSK Ltd., Shinagawa-ku Tokyo (JP)
(72) Inventor: Hirakawa, Tomohisa, Maebashi-shi Gunma 371-8527 (JP)
(74) Representative: Grünecker, Kinkeldey, Stockmair & Schwanhäusser Anwaltssozietät

(57) **Abstract**

An electric power steering apparatus has an EPS motor 100 which is coupled to a s.teering system and generates a torque for assisting a steering torque and an ECU 101 for controlling and driving the EPS motor 100. The EPS motor 100 is coupled to the ECU 101 via an elastic member 103. A sub-vibration system including the ECU 101 and the elastic member 103 constitutes a dynamic damper with respect to a main vibration system having the EPS motor 100 serving as a vibration source, whereby the sub-vibration system absorbs vibration generated on the EPS motor 100 side.

## Description

### BACKGROUND OF THE INVENTION

### 1. Field of the Invention

The present invention relates to a motor for an electric power steering apparatus mounted on a vehicle such as an automobile.

### 2. Description of Related Art

An EPS (electric power steering) motor used for an electric power steering apparatus may generate vibration and noise caused by the vibration at the time of rotation thereof. As a technique of controlling the vibration of a machine or a structure, a dynamic damper is known. The technique relating to the dynamic damper is disclosed in a Japanese Patent Unexamined Publication JP-A-2004-28295, for example.

In general, it is difficult to estimate the characteristics of vibration generated at the EPS motor. In most cases, the characteristics of vibration and noise of the EPS motor is found for the first time when the EPS motor is incorporated in an electric power steering apparatus. Thus, the structure of the EPS motor is required to be changed in order to improve the vibration and noise characteristics thereof, so that the development period and cost thereof are increased.

### SUMMARY OF THE INVENTION

Accordingly, an object of the invention is to reduce vibration and noise caused by the vibration generated at an EPS motor without changing the construction of the EPS motor.

An electric power steering apparatus according to the invention includes an electric motor and a control device which controls the electric motor, wherein the electric motor is coupled to the control device via an elastic member.
Thus, since a sub-vibration system including the control device and the elastic member constitutes a dynamic damper with respect to a main vibration system having the EPS motor serving as a vibration source, the sub-vibration system can reduce the vibration and noise generated on the EPS motor side. Further, even if the construction of the EPS motor changes, the vibration and noise generated by the EPS motor can be reduced without changing the configuration of the EPS motor by changing the weight of the control device and the characteristics of the elastic member.

The elastic member may be provided so as to cover an electric coupling portion between the electric motor and the control device.
Further, the elastic member may be formed by an elastic material with a high damping factor such as butyl rubber or an elastic material having expandable property.

### BRIEF DESCRIPTION OF THE DRAWINGS

Fig. 1A is a side view of the EPS motor according to the embodiment of the invention;
Fig. 1B is a bottom view of the EPS motor according to the embodiment of the invention; and
Fig. 2 is a diagram for explaining the principle of a dynamic damper (dynamic vibration absorber).

### DETAILED DESCRIPTION OF EXEMPLARY EMBODIMENTS OF THE INVENTION EMBODIMENTS

Hereinafter, an embodiment of the invention will be explained with reference to the drawings,

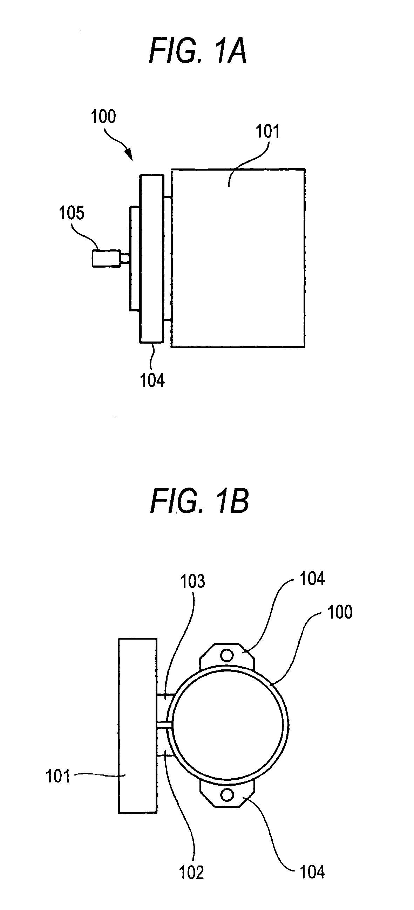

Fig. 1 is schematic diagrams showing the configuration of an EPS motor (electric power steering motor) 100 and an ECU (electronic control unit) 101 used for an electric power steering apparatus according to the first embodiment of the invention. Fig. 1A is a side view of the EPS motor 100 and Fig. 1B is a bottom view of the EPS motor 100.

As shown by the figures, the EPS motor 100 includes a flange 104 for fastening the EPS motor 100 to a steering column (steering system) and a steering shaft 105.
The ECU 101 is coupled to the EPS motor 100 via a plurality of conductive wires (electric coupling portion) 102 and a connector (not shown). The conductive wires 102 are formed by a harness for a sensor or power feeding to the motor. The conductive wires 102 and the connector are covered by an elastic member 103. The elastic member 103 is formed by an elastic material with a high damping factor such as butyl rubber or an elastic material having expandable (foaming) property, for example.

The ECU 101 controls the EPS motor 100 in a manner that when the steering wheel is rotated, the motor is rotated in accordance with the rotation of the steering wheel. The EPS motor 100 generates a steering assistance force corresponding to a steering torque generated at the steering shaft 105 and applies the steering assistance force to the steering system.

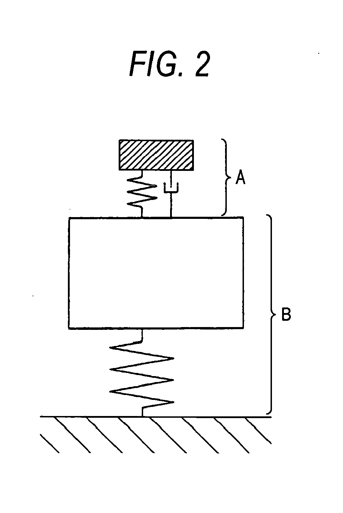

In the electric power steering apparatus according to the first embodiment, the ECU 101 and the elastic member 103 form a dynamic damper with respect to the EPS motor 100. Fig. 2 is a diagram for explaining the principle of the dynamic damper (dynamic vibration absorber).
When a periodical external force acts on a main vibration system B to generate vibration, a sub-vibration system A having the same natural vibration frequency as the main vibration system B absorbs the vibration energy of the main vibration system B as the vibration of the sub-vibration system A thereby to suppress the vibration of the main vibration system B. The sub-vibration system A is called as the dynamic damper (dynamic vibration absorber).
In the electric power steering apparatus according to the first embodiment, the EPS motor 100 corresponds to the main vibration system B, and the ECU 101 and the elastic member 103 correspond to the sub-vibration system A.
The sub-vibration system A can absorbs the vibration energy even if the vibration frequency of the sub-vibration system A differs from the vibration frequency of the main vibration system B.

According to the first embodiment, since the sub-vibration system including the ECU 101 and the elastic member 103 constitutes the dynamic damper with respect to the main vibration system having the EPS motor 100 serving as a vibration source, the sub-vibration system can reduce the vibration and noise generated on the EPS motor 100 side. Further, even if the construction of the EPS motor 100 changes, the vibration and noise generated by the EPS motor 100 can be reduced without changing the configuration of the EPS motor 100 by changing the weight of the ECU 101 and the characteristics of the elastic member 103.
The portion where the elastic member 1.03 is provided is not limited to be at the periphery of the conductive wires 102 but may be provided between the EPS motor 100 and the ECU 101.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the true spirit and scope of the present invention.

## Claims

1. An electric power steering apparatus, comprising:
an electric motor which is coupled to a steering system and generates a torque for assisting a steering torque; and
a control device which controls the electric motor,
wherein the electric motor is coupled to the control device via an elastic member.

2. The electric power steering apparatus according to claim 1, wherein the elastic member is provided so as to cover an electric coupling portion between the electric motor and the control device.

3. The electric power steering apparatus according to claim 1, wherein the elastic member is formed by an elastic material having expandable property.

4. The electric power steering apparatus according to claim 2, wherein the elastic member is formed by an elastic material having expandable property.

5. The electric power steering apparatus according to claim 1, wherein the elastic member is formed by butyl rubber.

6. The electric power steering apparatus according to claim 2, wherein the elastic member is formed by butyl rubber.
